# EUROPÄISCHE PATENTSCHRIFT

(11) **EP 1 992 505 B1**
(45) Veröffentlichungstag und Bekanntmachung des Hinweises auf die Patenterteilung: **30.12.2009**
(21) Anmeldenummer: 08152038.9
(22) Anmeldetag: 28.02.2008
(51) Int. Cl.: B60C 11/13

(54) **Fahrzeugluftreifen**
Pneumatic tyres for a vehicle
Pneus de véhicule

(30) Priorität: 12.05.2007 DE 102007022351
(43) Veröffentlichungstag der Anmeldung: 19.11.2008
(73) Patentinhaber: Continental Aktiengesellschaft, 30165 Hannover (DE)
(72) Erfinder: Bogenschütz, Peter, 30900, Wedemark (DE); Buchinger-Barnstorf, Thomas, 30974, Wennigsen (DE)
(74) Vertreter: Finger, Karsten

(56) Entgegenhaltungen:
- EP-A- 0 855 292
- WO-A-99/65814
- FR-A- 2 526 722
- US-A- 3 727 661
- US-A- 4 945 966
- US-A- 6 095 215
- US-A- 6 105 643

## Beschreibung

Die Erfindung betrifft einen Fahrzeugluftreifen mit Laufstreifenprofil mit durch Umfangsnuten - oder Umfangsrillen von einander abgetrennten erhabenen Profilelementen - insbesondere Umfangsrippen - mit einer in radialer Richtung des Fahrzeugluftreifens gemessenen Tiefe PT der Umfangsrillen und mit quer zu den Umfangsrillen verlaufenden nut- oder rillenförmigen Vertiefungen in den erhabenen Profilelementen mit einer in radialer Richtung des Fahrzeugluftreifens gemessenen Tiefe T der nut- oder rillenförmigen Vertiefungen, (siehe zum Beispiel das Dokument US-A-3 727 661).

Viele Fahrzeugluftreifen sind in dieser Weise mit Umfangsrillen und mit Querrillen ausgebildet, die radial erhabene Profilblockelemente von einander trennen. Die Querrillen gehen reichen dabei tief in das Reifenprofil von Neureifen hinein, um Flexibilität der Profilblockelemente und ausgeprägte Griffkanten zur Erhöhung der Traktionsfähigkeit und eine Drainagewirkung zur Ableitung von Wasser aus dem Profil zu erzielen. Daneben sind Fahrzeugluftreifen - insbesondere Nutzfahrzeugreifen - bekannt, bei denen die Bedeutung der Drainagewirkung und die Bedeutung der über Griffkanten erzeugten Traktion in des Fahrzeugluftreifens relativ gering, aber die Bedeutung großflächigen Bodenkontaktes, der durch die bekannten Rillen reduziert wird, relativ groß ist. Solche Fahrzeugluftreifen sind daher häufig als reines Umfangsrippenprofil ausgebildet.

Trotz hierdurch erzielten großflächigen Bodenkontaktes erzeugen solche Laufstreifenprofile bei Nutzern zum Teil aufgrund der offensichtlich fehlenden Griffkanten den Eindruck reduzierter Traktionsfähigkeit.

Der Erfindung liegt daher die Aufgabe zugrunde einen Fahrzeugluftreifen mit Laufstreifenprofil mit durch Umfangsnuten - oder Umfangsrillen von einander abgetrennten erhabenen Profilelementen - insbesondere Umfangsrippen - mit einer in radialer Richtung des Fahrzeugluftreifens gemessenen Tiefe PT der Umfangsrillen und mit quer zu den Umfangsrillen verlaufenden nut- oder rillenförmigen Vertiefungen in den erhabenen Profilelementen mit einer in radialer Richtung des Fahrzeugluftreifens gemessenen Tiefe T der nut- oder rillenförmigen Vertiefungen, zu schaffen, bei dem in einfacher Weise, der großflächige Bodenkontakt zur Erzeugung der erforderlichen Traktion und auch der Eindruck hoher Traktion über ausgeprägte Griffkanten ermöglicht wird.

Erfindungsgemäß wird die Aufgabe durch die Ausbildung eines Fahrzeugluftreifens mit Laufstreifenprofil mit durch Umfangsnuten - oder Umfangsrillen von einander abgetrennten erhabenen Profilelementen - insbesondere Umfangsrippen - mit einer in radialer Richtung des Fahrzeugluftreifens gemessenen Tiefe PT der Umfangsrillen und mit quer zu den Umfangsrillen verlaufenden nut- oder rillenförmigen Vertiefungen in den erhabenen Profilelementen mit einer in radialer Richtung des Fahrzeugluftreifens gemessenen Tiefe T der nut- oder rillenförmigen Vertiefungen gemäß den Merkmalen von Anspruch 1 gelöst, bei dem bei einer Tiefe PT von 14mm ≤ PT ≤ 20mm im Neuzustand des Fahrzeugluftreifens die Tiefe T zumindest einiger nut- oder rillenförmigen Vertiefungen mit 1mm ≤ T ≤ 3mm und das Verhältnis (B/T) aus Breite B dieser nut- oder rillenförmigen Vertiefungen zur Tiefe T mit 2≤(B/T)≤10 ausgebildet ist, bei dem zumindest in einigen dieser nut- oder rillenförmigen Vertiefungen mehrere voneinander beabstandete radiale Erhebungen ausgebildet sind, die sich bis zur radial äußeren Mantelfläche des erhabenen Profilelementes erstrecken.

Die relativ geringe Tiefe T der nut- oder rillenförmigen Vertiefungen in Verbindung mit den radialen Erhebungen ermöglicht es, dass die Fahrzeugluftreifen im Betriebszustand selbst bei breiten nut- oder rillenförmigen Vertiefungen weitgehend vollständigen Bodenkontakt auch über die breiten nut- oder rillenförmigen Vertiefungen hinweg mit hoher Traktionswirkung über Reibkräfte aufweisen, und dabei den Eindruck großer Traktionsfähigkeit über ausgeprägte Griffkanten erwecken.

Besonders vorteilhaft ist die Ausbildung gemäß den Merkmalen von Anspruch 2, wobei die radialen Erhebungen rippenförmige Erhebungen sind und wobei die Längserstreckungsrichtung zumindest einer - insbesondere aller - rippenförmigen Erhebungen aus einer nut- oder rillenförmigen Vertiefung und die Längserstreckungserstreckungsrichtung der nut- oder rillenförmigen Vertiefung zumindest teilweise - insbesondere vollständig - im Längserstreckungsbereich der rippenförmigen Erhebungen voneinander abweicht. Die radialen Erhebungen erhalten somit eine gerichtete Aussteifung quer zur Erstreckung der nut- oder rillenförmigen Vertiefung im Bereich der Vetiefung. Der Bodenkontakt kann hierdurch im Bereich der Vertiefung weiter vergleichmäßigt und zusätzlich das erhabene Profilelement in seiner Steifigkeit vergleichmäßigt werden. Dies ist vorteilhaft für eine hohe Laufleistung des Fahrzeugreifens.

Besonders vorteilhaft ist die Ausbildung gemäß den Merkmalen von Anspruch 3, wobei zumindest einige - insbesondere alle - der rippenförmigen Erhebungen einer nut- oder rillenförmigen Vertiefung sich über die gesamte Breite der nut- oder rillenförmigen Vertiefung hinweg erstrecken. Der Bodenkontakt kann hierdurch im Bereich der Vertiefung weiter vergleichmäßigt und zusätzlich das erhabene Profilelement in seiner Steifigkeit vergleichmäßigt werden. Dies ist vorteilhaft für eine hohe Laufleistung des Fahrzeugreifens.

Besonders vorteilhaft ist die Ausbildung gemäß den Merkmalen von Anspruch 4, wobei zumindest einige, jeweils benachbarte - insbesondere alle - rippenförmige Erhebungen einer nut- oder rillenförmigen Vertiefung im wesentlichen parallel zueinander verlaufend angeordnet sind. Der Bodenkontakt kann durch gezielte Wahlt der parallelen Ausrichtung gezielt eingestellt vergleichmäßigt werden. Die Parallelität erleichtert darüber hinaus die Fertigung eines solchen Fahrzeugreifens.

Besonders vorteilhaft ist die Ausbildung gemäß den Merkmalen von Anspruch 5, bei der die nut- oder rillenförmigen Vertiefung wenigstens drei Längserstreckungsbereiche aufweist, mit zwei äußeren Erstreckungsbereichen, die jeweils in eine von zwei benachbarten Umfangsrillen münden, und einem zwischen diesen beiden äußeren Erstreckungsbereichen ausgebildeten dritten Erstreckungsbereich, wobei der dritte Erstreckungsbereich eine größere Richtungskomponente seiner wesentlichen Längserstreckungskomponente in Umfangsrichtung U des Fahrzeugluftreifens aufweist, als die beiden äußeren Erstreckungsbereiche. Hierdurch kann bei gleichmäßigem Bodenkontakt das Abrollgeräusch reduziert werden.

Besonders vorteilhaft ist die Ausbildung gemäß den Merkmalen von Anspruch 6, wobei wenigstens eine der beiden äußeren Erstreckungsbereiche im Wesentlichen in axialer Richtung A verlaufender Längserstreckungsrichtung ausgebildet ist. Hierdurch kann die Steifigkeit im Bereich der Einmündung der Vertiefung in die Umfangsrille bzw. Umfangsnut optimiert und die Laufleistung verbessert werden.

Besonders vorteilhaft ist die Ausbildung gemäß den Merkmalen von Anspruch 7, wobei die beiden äußeren Erstreckungsbereiche mit im Wesentlichen parallel zueinander verlaufender Längserstreckungsrichtung ausgebildet sind. Hierdurch wird eine harmonische Steifigkeitsverteilung der erhabenen Profilelemente begünstigt.

Besonders vorteilhaft ist die Ausbildung gemäß den Merkmalen von Anspruch 8, wobei in dem dritten Erstreckungsbereichen der nut- oder rillenförmigen Vertiefung radiale Erhebungen ausgebildet sind und wobei die beiden ersten Erstreckungsbereichen der nut- oder rillenförmigen Vertiefung frei von radialen Erhebungen ausgebildet sind.

Die Erfindung wird im Folgenden an Hand der in den Figuren 1 bis 4 dargestellten Ausführungsbeispiele eines Laufstreifenprofils eines Fahrzeugluftreifens für Schwerlastfahrzeuge mit Rippenprofil näher erläutert. Hierin zeigen:
- Fig. 1: Ausschnitt eines beispielhaften Laufstreifenprofils für Schwerlastfahrzeuge mit fünf Umfangsrippen und mit vier Umfangsrillen,
- Fig. 2: Vergrößerter Ausschnitt eines Umfangsabschnitts einer Umfangsrippe zur Erläuterung der erfindungsgemäßen Ausbildung einer kanalförmigen Vertiefung mit radialen Erhebungen,
- Fig. 3: Ausschnittsweise Darstellung einer alternativen Rippenausbildung in Draufsicht
- Fig. 4: Querschnittsdarstellung längs des Schnittes IV-IV von Fig. 2 zur Erläuterung der Ausbildung der radialen Erhebungen.

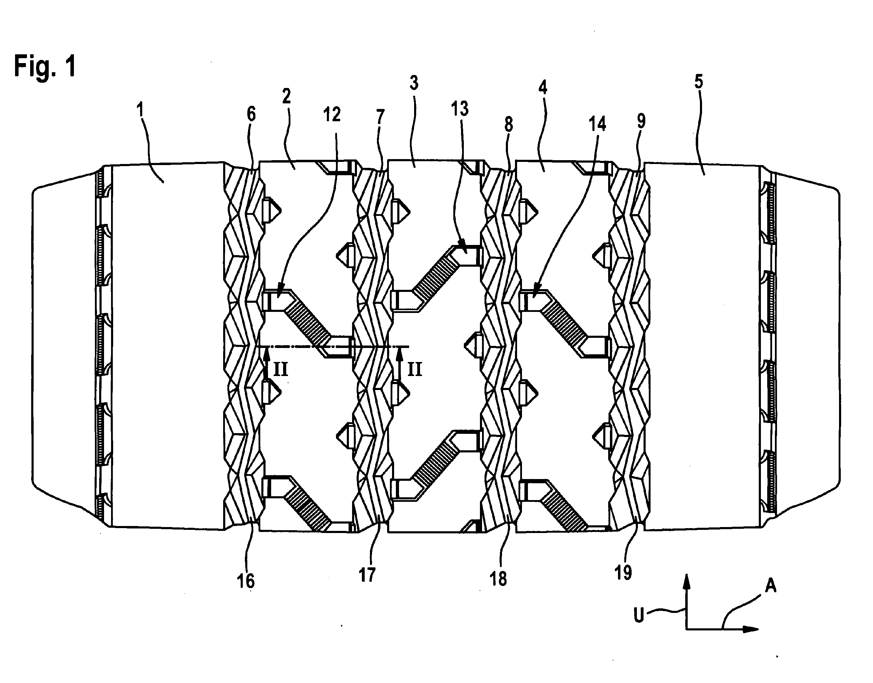

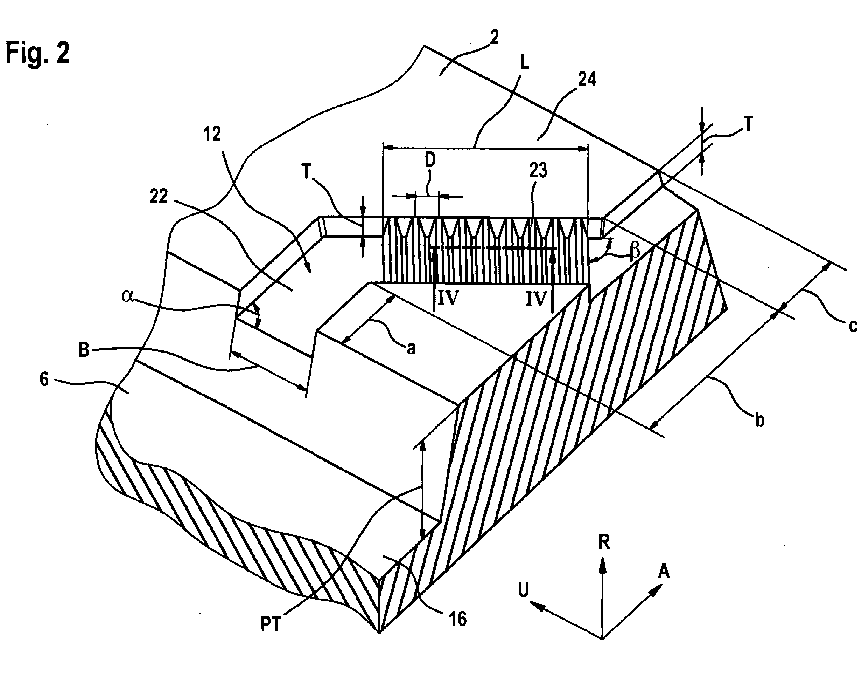

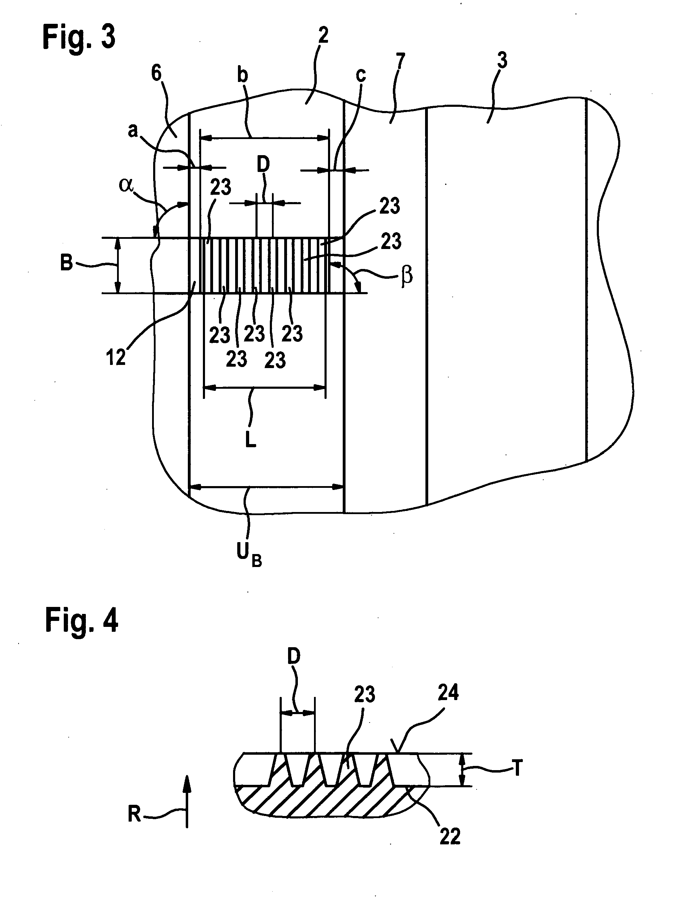

Die Figuren 1 und 2 zeigen das Laufstreifenprofil eines Schwerlastfahrzeugreifens mit fünf jeweils über den Umfang des Fahrzeugluftreifens in Umfangsrichtung U erstreckt ausgebildeten Umfangsrippen 1, 2, 3, 4 und 5, die in axialer Richtung A des Fahrzeugluftreifens jeweils durch über den Umfang des Fahrzeugluftreifens in Umfangsrichtung U erstreckt ausgebildete Umfangsrillen 6, 7, 8 bzw. 9 voneinander getrennt angeordnet sind. Die Umfangsrillen 6, 7, 8 und 9 sind jeweils mit einem über den gesamten Umfang des Fahrzeugluftreifens erstreckten Rillengrund 16, 17, 18 bzw. 19 ausgebildet, aus dem heraus sich beidseitig des jeweiligen Rillengrundes 16, 17, 18 bzw. 19 in bekannter Weise jeweils die die axialen Rippenflanken der jeweils angrenzenden Umfangsrippen 1, 2, 3, 4 bzw. 5 bildenden Rillenwände radial von innen nach außen bis zur radial äußeren das Laufstreifenprofil nach radial außen begrenzenden Mantelfläche 24 erstrecken. Der Rillengrund 16, 17, 18 bzw. 19 der Umfangsrillen 6, 7, 8 bzw. 9 ist beispielsweise - wie in Fig. 1 dargestellt - mit einem zickzackförmigen Verlauf in Umfangsrichtung U oder - wie in Fig. 2 oder in Fig. 3 dargestellt ist - mit geradlinigem Verlauf in Umfangsrichtung U ausgebildet.

Ebenso sind die jeweils zu den Umfangsrillen 6, 7, 8 bzw. 9 gerichteten axialen Rippenflanken der Umfangsrippen 1, 2, 3, 4 bzw. 5 beispielsweise - wie in Fig. 1 dargestellt ist - mit längs der Umfangserstreckung der jeweiligen Umfangsrippe 1, 2, 3, 4 bzw. 5 wechselndem Verlauf ihres Flankenneigungswinkels zur radialen Richtung R des Fahrzeugluftreifens oder aber in alternativer Form - wie beispielsweise in Fig. 2 und in Fig. 3 dargestellt ist - mit längs der Umfangserstreckung der jeweiligen Umfangsrippe 1, 2, 3, 4 gleich bleibender Neigung ausgebildet.

Die Fahrzeugluftreifen sind als Neureifen mit einer Profiltiefe PT ausgebildet, die das maximale Maß der Erstreckung in radialer Richtung R aus dem jeweiligen Rillengrund 16, 17, 18 bzw. 19 der Rille 6, 7, 8 bzw. 9 bis zur Mantelfläche 24 der die jeweilige Umfangsrille 6, 7, 8 bzw. 9 jeweils axial begrenzenden Umfangsrippen 1 bzw. 2 bzw. 3 bzw. 4 bzw. 5 darstellt.

Wie in Fig. 1, Fig. 2 und Fig. 4 zu erkennen ist, sind in den drei axial zwischen den beiden die Reifenschultern bildenden äußeren Umfangsrippen 1 und 5 angeordneten Umfangsrippen 2, 3 und 4 jeweils über den Umfang des Fahrzeugluftreifens in Umfangsrichtung U verteilt angeordnet über die gesamte Rippenbreite der zugehörigen Umfangsrippe 2, 3 bzw. 4 erstreckt ausgebildete kanalförmige Vertiefungen 12, 13 bzw. 14 ausgebildet. Die kanalförmige Vertiefungen 12 erstrecken sich jeweils ausgehend von der die Umfangsrippe 2 begrenzenden Umfangsrille 6 bis zu der die Umfangsrippe 2 begrenzenden Umfangsrille 7. Die kanalförmigen Vertiefungen 13 erstrecken sich jeweils ausgehend von der die Umfangsrippe 3 axial begrenzenden Umfangsrille 7 bis zu der die Umfangsrippe 3 begrenzenden Umfangsrille 8. Die kanalförmigen Vertiefungen 14 der Umfangsrippe 4 erstrecken sich jeweils ausgehend von der die Umfangsrippe 4 axial begrenzenden Umfangsrille 8 bis zu der die Umfangsrippe 4 begrenzenden Umfangsrille 9.

Die nähere Ausbildung der kanalförmigen Vertiefungen 12, 13 und 14 wird im Folgenden beispielhaft an einer kanalförmigen Vertiefung 12 der Umfangsrippe 2 näher erläutert.

Die kanalförmige Vertiefung 12 ist - wie in den Figuren 1 und 2 zu erkennen ist - aus drei axial nebeneinander angeordneten und ineinander übergehenden Erstreckungsbereichen a, b und c ausgebildet. Die kanalförmige Vertiefung 12 ist mit einem im Wesentlichen flachen ebenen Vertiefungsgrund 22 mit einer Breite B der kanalförmigen Vertiefung 12 - gemessen im Vertiefungsgrund 22 -, die jeweils quer zur Längserstreckungsverlaufsrichtung der kanalförmigen Vertiefung gemessen wird.

Die Tiefe T der kanalförmigen Vertiefung wird in radialer Richtung R des Fahrzeugluftreifens gemessen und bildet das maximale radiale Erstreckungsmaß zwischen dem flachem, ebenem Vertiefungsgrund 22 und der Mantelfläche 24 der Umfangsrippe 2.

Das Maß der Profiltiefe PT ist dabei so gewählt, dass für PT am Neureifen gilt: 14mm ≤ PT ≤ 20 mm. Beispielsweise ist PT = 18 mm gewählt.

Das Maß der Tiefe T der kanalförmigen Vertiefung ist so gewählt, dass für T am Neureifen gilt: 1mm ≤ T ≤ 3mm. Beispielsweise ist T = 2 mm gewählt.

Für das Verhältnis der Breite B der kanalförmigen Vertiefung zur Tiefe T der kanalförmigen Vertiefung am Neureifen gilt 2 ≤ B/T ≤ 10.

B ist beispielsweise so gewählt, dass für B gilt: 15 mm ≥ B ≥ 5mm.

In einem Ausführungsbeispiel ist B = 10 mm, T = 2 mm und somit (B/T) = 5 gewählt.

In dem axial zwischen den beiden äußeren Erstreckungsbereichen a und c angeordneten, mittleren Erstreckungsbereich b der kanalförmigen Vertiefung 12 sind längs seiner Erstreckung in Längserstreckungsrichtung der kanalförmigen Vertiefung 12 mehrere nebeneinander angeordnete und parallel zueinander ausgerichteten rippenförmige radiale Erhebungen 23 ausgebildet, die sich jeweils aus dem Vertiefungsgrund 22 radial nach außen bis zur Mantelfläche 24 über die gesamte Tiefe T der kanalförmigen Vertiefung hindurch erstrecken. Die rippenförmigen Erhebungen 23 erstrecken sich mit der Längserstreckung ihrer Rippenform über die gesamte Breite B der kanalförmigen Vertiefung 12 jeweils unter Einschluss eines Winkel β zur Längserstreckungsrichtung der kanalförmigen Vertiefung 12 im Erstreckungsbereich b der kanalförmigen Vertiefung 12.

Die kanalförmige Vertiefung 12 ist in der Ausrichtung ihrer Längserstreckungsrichtung jeweils unter Einschluss eines Winkels α der Längserstreckungsrichtung zur Umfangsrichtung U des Fahrzeugluftreifens ausgebildet.

Die Winkel α und β sind dabei so gewählt, dass für α und β gilt: 125° ≥ α ≥ 55° und 125° ≥ β ≥55°.

In einer Ausbildung ist Winkel β für alle rippenförmigen Erhebungen 23 einer radialen Vertiefung 23 längs der gesamten Erstreckung der rippenförmigen Erhebung mit gleich groß ausgebildet, so dass die rippenförmigen Erhebungen 23 mit ihrer Längserstreckung der Rippenform einen geradlinigen Verlauf aufweisen. In einer anderen nicht dargestellten Ausbildung ist der Winkel β für alle rippenförmigen Erhebungen 23 einer radialen Vertiefung 23 längs der Erstreckung der rippenförmigen Erhebung verändert ausgebildet.

Im dargestellten Ausführungsbeispiel von Fig. 1 und Fig. 2 ist α in den beiden äußeren Erstreckungsbereichen a und c der kanalförmige Vertiefung 12 jeweils über deren gesamte Erstreckung mit α = 90° und in dem mittleren Erstreckungsbereich b über dessen gesamte Erstreckung mit α = 45° ausgebildet. Der Winkel β ist für alle rippenförmigen Erhebungen 23 in den in Fig. 1 und Fig. 2 dargestellten Ausführungsbeispielen längs der gesamten Erstreckung der rippenförmigen Erhebung mit β = 90° ausgebildet.

Fig. 3 zeigt eine Ausführung, bei der sowohl in den äußeren Erstreckungsbereichen a und a als auch im mittleren Erstreckungsbereich b der kanalförmigen Vertiefung 12 der Winkel α jeweils über deren gesamte Erstreckung mit α = 90° gewählt ist. Auch in dieser dargestellten Ausführung ist der Winkel β für alle rippenförmigen Erhebungen 23 längs der gesamten Erstreckung der rippenförmigen Erhebung mit β = 90° gewählt.

Die rippenförmigen Erhebungen 23 sind - wie in Fig. 3 und Fig. 4 dargestellt ist - jeweils in einem Abstand D voneinander ausgebildet, wobei der Abstand D jeweils in der radialen Position der Mantelfläche 24 zwischen den Mittellinien der nach radial außen gerichteten Kontaktfläche zur Herstellung des Bodenkontaktes der jeweils benachbarten rippenförmigen Erhebungen 23 gemessen wird.

Die Abstände D der benachbarten rippenförmigen Erhebungen sind beispielsweise so gewählt, dass 0,5 mm ≤ D ≤ 4 mm. Beispielsweise ist D mit 1 mm gewählt.

Die rippenförmigen Erhebungen 23 erstrecken sich innerhalb des Abschnittes b der kanalförmigen Vertiefung 12 längs der Längserstreckungsrichtung der kanalförmigen Vertiefung 12 über eine Gesamterstreckungslänge L, wobei L in Längserstreckungsrichtung der kanalförmigen Vertiefung 12 im Abschnittes b der kanalförmigen Vertiefung 12 gemessen wird.

Die Erstreckungsbereiche a, b, c der kanalförmigen Vertiefung 12 sowie die Erstreckungslänge L sind dabei so gewählt, dass für diese gilt: (a+b+c) > L > (a+b+c) / 3.

### Bezugszeichenliste

### (Teil der Beschreibung)

- 1: Umfangsrippe
- 2: Umfangsrippe
- 3: Umfangsrippe
- 4: Umfangsrippe
- 5: Umfangsrippe
- 6: Umfangsrille
- 7: Umfangsrille
- 8: Umfangsrille
- 9: Umfangsrille
- 12: Vertiefungskanal
- 13: Vertiefungskanal
- 14: Vertiefungskanal
- 16: Rillengrund
- 17: Rillengrund
- 18: Rillengrund
- 19: Rillengrund
- 22: Vertiefungsgrund
- 23: Rippenförmige Erhebung
- 24: Mantelfläche

## Patentansprüche

1. Fahrzeugluftreifen - insbesondere für Schwerlastfahrzeuge - mit Laufstreifenprofil mit durch Umfangsnuten oder Umfangsrillen (6,7,8,9) von einander getrennten erhabenen Profilelementen - insbesondere Umfangsrippen (1,2,3,4,5) - mit einer in radialer Richtung des Fahrzeugluftreifens gemessenen Tiefe PT der Umfangsrillen (6,7,8,9) und mit quer zu den Umfangsrillen (6,7,8,9) verlaufenden nut- oder rillenförmigen Vertiefungen (12,13,4) in den erhabenen Profilelementen mit einer in radialer Richtung R des Fahrzeugluftreifens gemessenen Tiefe T der nut- oder rillenförmigen Vertiefungen (12,13,4),
**dadurch gekennzeichnet,**
**dass** bei einer Tiefe PT von 14mm ≤ PT ≤ 20mm im Neuzustand des Fahrzeugluftreifens die Tiefe T zumindest einiger nut- oder rillenförmigen Vertiefungen (12) mit 1mm ≤ T ≤ 3mm und das Verhältnis (Br/T) aus Breite B dieser nut- oder rillenförmigen Vertiefungen (12) zur Tiefe T mit 2≤(B/T)≤10 ausgebildet ist,
**dass** zumindest in einigen dieser nut- oder rillenförmigen Vertiefungen (12) mehrere voneinander beabstandete radiale Erhebungen (23) ausgebildet sind, die sich bis zur radial äußeren Mantelfläche des erhabenen Profilelementes erstrecken.

2. Fahrzeugluftreifen gemäß den Merkmalen von Anspruch 1,
wobei die radialen Erhebungen (23) rippenförmige Erhebungen sind und
wobei die Längserstreckungsrichtung zumindest einer - insbesondere aller - rippenförmigen Erhebungen (23) aus einer nut- oder rillenförmigen Vertiefung (12) und die Längserstreckungserstreckungsrichtung der nut- oder rillenförmigen Vertiefung (12) zumindest teilweise - insbesondere vollständig - im Längserstreckungsbereich der rippenförmigen Erhebungen (23) voneinander abweicht.

3. Fahrzeugluftreifen gemäß den Merkmalen von Anspruch 2,
wobei zumindest einige - insbesondere alle - der rippenförmigen Erhebungen (23) einer nut- oder rillenförmigen Vertiefung (12) sich über die gesamte Breite B der nut- oder rillenförmigen Vertiefung (12) hinweg erstrecken.

4. Fahrzeugluftreifen gemäß den Merkmalen von Anspruch 2 oder 3,
wobei zumindest einige, jeweils benachbarte - insbesondere alle - rippenförmige Erhebungen (23) einer nut- oder rillenförmigen Vertiefung (12) im wesentlichen parallel zueinander verlaufend angeordnet sind.

5. Fahrzeugluftreifen gemäß den Merkmalen von einem oder mehreren der Ansprüche 1 bis 4,
bei dem die nut- oder rillenförmigen Vertiefung (12) wenigstens drei Längserstreckungsbereiche (a,b,c) aufweist, mit zwei äußeren Erstreckungsbereichen (a,c), die jeweils in eine von zwei benachbarten Umfangsrillen (1,2) münden, und einem zwischen diesen beiden äußeren Erstreckungsbereichen (a,c) ausgebildeten dritten Erstreckungsbereich (b), wobei der dritten Erstreckungsbereich (b) in seiner wesentlichen Längserstreckungsrichtung eine größere Richtungskomponente in Umfangsrichtung U des Fahrezgeugreifens aufweist, als die beiden äußeren Erstreckungsbereiche.

6. Fahrzeugluftreifen gemäß den Merkmalen von Anspruch 5,
wobei wenigstens eine der beiden äußeren Erstreckungsbereiche (a,c) mit im Wesentlichen in axialer Richtung A des Fahrzeugluftreifens verlaufender Längserstreckungsrichtung ausgebildet ist.

7. Fahrzeugluftreifen gemäß den Merkmalen von Anspruch 5 oder 6,
wobei die beiden äußeren Erstreckungsbereiche (a,c) mit im Wesentlichen parallel zueinander verlaufender Längserstreckungsrichtung ausgebildet sind

8. Fahrzeugluftreifen gemäß den Merkmalen von einem oder mehreren der Ansprüche 5 bis 7,
wobei in dem dritten Erstreckungsbereich (b) der nut- oder rillenförmigen
Vertiefung (12) radiale Erhebungen (23) ausgebildet sind und wobei die beiden ersten Erstreckungsbereichen (a,c) der nut- oder rillenförmigen Vertiefung (12) frei von radialen Erhebungen (23) ausgebildet sind.

## Claims

1. Pneumatic vehicle tyre - in particular for heavy trucks - with a tread profile with raised profile elements - in particular circumferential ribs (1, 2, 3, 4, 5) - separated from one another by circumferential grooves or circumferential channels (6, 7, 8, 9), with a depth PT of the circumferential channels (6, 7, 8, 9), measured in the radial direction of the pneumatic vehicle tyre, and with groove- or channel-shaped depressions (12, 13, 14), running transversely in relation to the circumferential channels (6, 7, 8, 9), in the raised profile elements with a depth T of the groove- or channel-shaped depressions (12, 13, 14), measured in the radial direction R of the pneumatic vehicle tyre, **characterized in that**, with a depth PT of 14 mm ≤ PT ≤ 20 mm in the new condition of the pneumatic vehicle tyre, the depth T of at least some groove- or channel-shaped depressions (12) is formed with 1 mm ≤ T ≤ 3 mm and the ratio (B/T) of the width B of these groove- or channel-shaped depressions (12) to the depth T is formed with 2 ≤ (B/T) ≤ 10, **in that** a number of spaced-apart radial elevations (23), which extend up to the radially outer lateral surface of the raised profile element, are formed at least in some of these groove- or channel-shaped depressions (12).

2. Pneumatic vehicle tyre according to the features of Claim 1, wherein the radial elevations (23) are rib-shaped elevations and wherein the direction of longitudinal extent of at least one, in particular all - rib-shaped elevations (23) from a groove- or channel-shaped depression (12) and the direction of longitudinal extent of the groove- or channel-shaped depression (12) deviate from one another at least partially - in particular completely - in the region of longitudinal extent of the rib-shaped elevations (23).

3. Pneumatic vehicle tyre according to the features of Claim 2, wherein at least some - in particular all - the rib-shaped elevations (23) of a groove- or channel-shaped depression (12) extend over the entire width B of the groove- or channel-shaped depression (12).

4. Pneumatic vehicle tyre according to the features of Claim 2 or 3, wherein at least some, respectively adjacent - in particular all - rib-shaped elevations (23) of a groove- or channel-shaped depression (12) are arranged such that they run substantially parallel to one another.

5. Pneumatic vehicle tyre according to the features of one or more of Claims 1 to 4, in which the groove- or channel-shaped depression (12) has at least three regions of longitudinal extent (a, b, c), with two outer regions of extent (a, c), which respectively open out into one of two adjacent circumferential grooves (6, 7), and a third region of extent (b), formed between these two outer regions of extent (a, c), wherein the third region of extent (b) has in its principal direction of longitudinal extent a greater directional component in the circumferential direction U of the vehicle tyre than the two outer regions of extent.

6. Pneumatic vehicle tyre according to the features of Claim 5, wherein at least one of the two outer regions of extent (a, c) is formed with the direction of longitudinal extent running substantially in the axial direction A of the pneumatic vehicle tyre.

7. Pneumatic vehicle tyre according to the features of Claim 5 or 6, wherein the two outer regions of extent (a, c) are formed with the direction of longitudinal extent running substantially parallel to one another.

8. Pneumatic vehicle tyre according to the features of one or more of Claims 5 to 7, wherein radial elevations (23) are formed in the third region of extent (b) of the groove- or channel-shaped depression (12) and wherein the two first regions of extent (a, c) of the groove- or channel-shaped depression (12) are formed free from radial elevations (23).

## Revendications

1. Bandage pneumatique pour roue de véhicule, en particulier de véhicule poids lourd, qui présente
un profilé de bande de roulement doté d'éléments profilés, en particulier des nervures périphériques (1, 2, 3, 4, 5), rehaussés et séparés les uns des autres par des gorges périphériques ou rainures périphériques (6, 7, 8, 9), la profondeur des rainures périphériques (6, 7, 8, 9) mesurée dans la direction radiale du bandage pneumatique pour roue de véhicule étant désignée par PT,
et de creux en forme de gorge ou de rainure (12, 13, 14) qui s'étendent transversalement par rapport aux rainures périphériques (6, 7, 8, 9) dans les éléments profilés rehaussés, les creux (12, 13, 14) en forme de gorge ou de rainure présentant une profondeur T dans la direction radiale R du bandage pneumatique pour roue de véhicule,
**caractérisé en ce que**
lorsque la profondeur PT est comprise entre 14 mm ≤ PT ≤ 20 mm sur le bandage pneumatique pour roue de véhicule à l'état neuf, la profondeur T d'au moins certains des creux (12) en forme de gorge ou de rainure est de 1 mm ≤ T ≤ 3 mm et le rapport (B/T) entre la largeur B de ces creux (12) en forme de gorge ou de rainure et la profondeur T est de 2 ≤ (B/T) ≤ 10, et
**en ce que** plusieurs rehaussements radiaux (23) sont formés à distance les uns des autres au moins dans certains des ces creux (12) en forme de gorge ou de rainure et s'étendent jusqu'à la surface d'enveloppe radialement extérieure de l'élément profilé rehaussé.

2. Bandage pneumatique pour roue de véhicule selon les caractéristiques de la revendication 1, dans lequel les rehaussements radiaux (23) sont des rehaussements en forme de nervure et en ce que la direction d'extension longitudinale d'au moins un rehaussement (23) en forme de nervure et en particulier de tous les rehaussements d'un creux (12) en forme de gorge ou de rainure et la direction d'extension longitudinale du creux (12) en forme de gorge ou de rainure diffèrent au moins en partie et de préférence totalement l'une de l'autre dans la plage d'extension longitudinale des rehaussements (23) en forme de nervure.

3. Bandage pneumatique pour roue de véhicule selon les caractéristiques de la revendication 2, dans lequel au moins certains et en particulier tous les rehaussements (23) en forme de nervure d'un creux (12) en forme de gorge ou de rainure s'étendent sur toute la largeur B du creux (12) en forme de gorge ou de rainure.

4. Bandage pneumatique pour roue de véhicule selon les caractéristiques des revendications 2 ou 3, dans lequel au moins certains et en particulier tous les rehaussements (23) voisins en forme de nervure d'un creux (12) en forme de gorge ou de rainure s'étendent essentiellement parallèlement les uns aux autres.

5. Bandage pneumatique pour roue de véhicule selon les caractéristiques d'une ou de plusieurs des revendications 1 à 4, dans lequel le creux (12) en forme de gorge ou de rainure présente au moins trois parties (a, b, c) d'extension longitudinale, deux parties extérieures d'extension (a, c) débouchant respectivement dans une parmi deux rainures périphériques voisines (6, 7), et une troisième partie d'extension (b) formée entre ces deux parties extérieures d'extension (a, c), la troisième partie d'extension (b) présentant dans son extension essentiellement longitudinale une plus grande composante d'orientation dans la direction périphérique U du bandage pour roue de véhicule que les deux autres parties extérieures d'extension.

6. Bandage pneumatique pour roue de véhicule selon les caractéristiques de la revendication 5, dans lequel au moins l'une des deux parties extérieures d'extension (a, c) est formée avec une direction d'extension longitudinale qui s'étend essentiellement dans la direction axiale (a) du bandage pneumatique pour roue de véhicule.

7. Bandage pneumatique pour roue de véhicule selon les caractéristiques des revendications 5 ou 6, dans lequel les deux parties extérieures d'extension (a, c) sont formées avec des directions d'extension longitudinales qui s'étendent parallèlement l'une à l'autre.

8. Bandage pneumatique pour roue de véhicule selon les caractéristiques d'une ou plusieurs des revendications 5 à 7, dans lequel des rehaussements radiaux (23) sont formés dans la troisième partie d'extension (b) du creux (12) en forme de gorge ou de rainure, les deux premières parties d'extension (a, c) du creux (12) en forme de gorge ou de rainure ne présentant pas de rehaussements radiaux (23).
